# FASCICULE DE BREVET EUROPEEN

(11) **EP 0 662 889 B1**
(45) Date de publication et mention de la délivrance du brevet: **28.02.1996**
(21) Numéro de dépôt: 93920911.0
(22) Date de dépôt: 22.09.1993
(51) Int. Cl.: B60T 7/06, G05G 1/14

(54) **DISPOSITIF DE PEDALE POUR VEHICULE AUTOMOBILE, NOTAMMENT POUR SYSTEME DE FREINAGE**
PEDALVORRICHTUNG FÜR KRAFTFAHRZEUG, INSBESONDERE FÜR BREMSANLAGE
PEDAL DEVICE, ESPECIALLY A BRAKE PEDAL, FOR USE IN MOTOR VEHICLES

(30) Priorité: 07.10.1992 FR 9211863
(43) Date de publication de la demande: 19.07.1995
(73) Titulaire: ALLIEDSIGNAL EUROPE SERVICES TECHNIQUES, F-93700 Drancy (FR)
(72) Inventeur: GAUTIER, Jean-Pierre, F-93600 Aulnay-sous-Bois (FR); VERBO, Ulysse, F-93600 Aulnay-sous-Bois (FR); PEREZ REVILLA, Miguel, F-95100 Argenteuil (FR)
(74) Mandataire: Bentz, Jean-Paul
(86) Numéro de dépôt international: FR9300915
(87) Numéro de publication internationale: WO9407715

(56) Documents cités:
- DE-A- 2 543 309
- DE-U- 8 816 385
- FR-A- 2 268 300

## Description

La présente invention a pour objet un dispositif de pédale pour véhicule automobile, notamment mais non exclusivement pour un système de freinage de véhicule automobile.

Plus précisément, l'invention concerne un dispositif de pédale tel que défini dans le préambule de la revendiction principale.

Dans un véhicule automobile, le freinage est commandé par le conducteur à l'aide d'une pédale qui transmet, le plus souvent par l'intermédiaire d'un servomoteur, la commande de freinage au maître-cylindre, ce dernier provoquant l'actionnement effectif des freins.

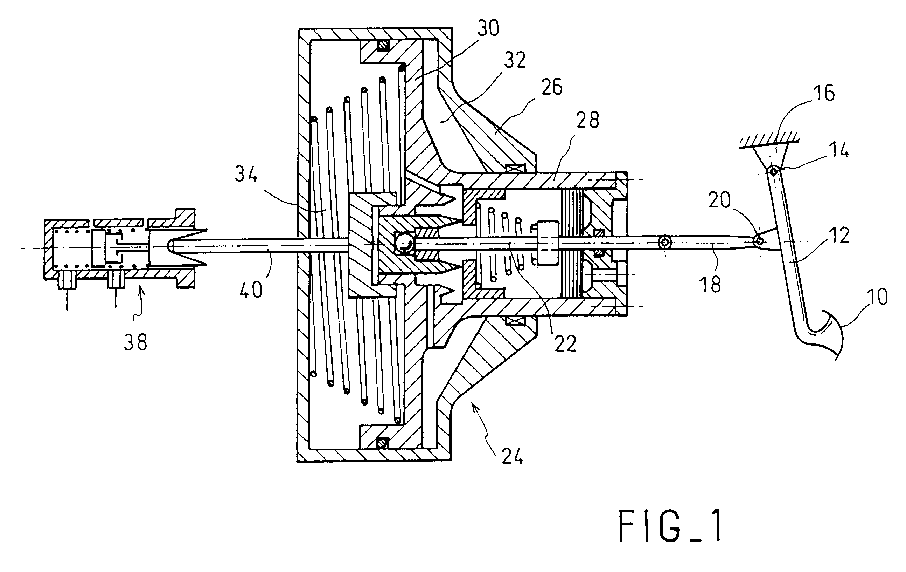

La figure 1 illustre de façon simplifiée un tel système de freinage. On a représenté la pédale 10 qui est fixée à l'extrémité d'une première tige 12 et dont la deuxième extrémité 14 est articulée autour d'un axe fixe par rapport à la caisse 16 du véhicule automobile. Les déplacements de la pédale 10 sont transmis par l'intermédiaire d'une tige de commande 18 articulée en 20 par rapport à la première tige 12. La tige de commande 18 se prolonge en 22 dans le servomoteur 24 d'assistance au freinage. Comme cela est bien connu, le servomoteur 24 est essentiellement constitué par une enveloppe 26 dans laquelle est montée un piston 28 et une jupe de piston 30 qui, associé à un diaphragme déformable, sépare l'enveloppe 26 en deux chambres 32 et 34. Sous l'effet des déplacements de la tige 22, on peut mettre soit en dépression, soit à la pression atmosphérique la chambre 32. La mise à la pression atmosphérique de la chambre 32 sous l'effet de la tige 22 provoque le déplacement de la jupe de piston 30 qui commande le maître-cylindre 38 par l'intermédiaire de la tige de poussée 40.

Le type de liaison mécanique entre la première tige et la tige de commande 18 du système de pédale proprement dit présente une grande sécurité et une grande fiabilité. Cependant, le montage présente l'inconvénient que les vibrations du moteur, et plus généralement du véhicule automobile, sont transmises à la pédale 10. En effet, dans ces systèmes, il existe toujours des jeux qui permettent la mise en vibration finale de la tige 12. Cette vibration ne présente aucun risque quant à la sécurité du système de freinage mais elles sont désagréables pour le pied de l'automobiliste et en outre elles provoquent la création de bruits qui altèrent le confort de l'automobiliste dans son véhicule.

Le document DE-U-8 816 385 décrit un dispositif qui cherche à résoudre ce problème mais qui en fait ne permet pas d'éviter les bruits liés aux vibrations de la pédale dans un plan perpendiculaire à la direction de son actionnement.

Un objet de la présente invention est de fournir un dispositif de pédale pour véhicule automobile, notamment pour le système de freinage de celui-ci, qui pallie les inconvénients mentionnés ci-dessus et qui, en particulier, évite ou réduit très sensiblement la transmission des vibrations du moteur à la pédale, notamment à la pédale de freinage.

Pour atteindre ce but, le dispositif de pédale pour véhicule automobile de l'invention, qui comprend des moyens élastiques pour plaquer une partie de la paroi de l'orifice de la première tige contre la partie en regard dudit axe de pivotement, est essentiellement caractérisée en ce que les moyens élastiques comprennent des moyens pour sensiblement immobiliser en translation la première tige par rapport à ladite chape selon la direction de l'axe de pivotement.

On comprend qu'ainsi on évite la transmission des vibrations, non seulement résultant du jeu qui existe entre la première tige et l'axe de pivotement selon la direction d'actionnement de la pédale, mais également du jeu selon la direction de l'axe de pivotement.

Selon un premier mode de mise en oeuvre de l'invention, les moyens élastiques comprennent une pièce en matériau élastique, par exemple en matériau élastomérique ou en caoutchouc, et des moyens mécaniques pour maintenir la pièce en matériau élastique contre le deuxième côté de la première tige.

Selon un deuxième mode de mise en oeuvre de l'invention, les moyens élastiques comprennent un organe formant ressort dont les extrémités sont solidaires de la chape et dont une portion médiane est appliquée sur le deuxième côté de la première tige.

D'autres caractéristiques et avantages de la présente invention apparaîtront mieux à la lecture de la description qui suit de plusieurs modes de réalisation de l'invention donnés à titre d'exemples non limitatifs. La description se réfère aux figures annexées sur lesquelles :
- la figure 1, déjà décrite, montre un dispositif de pédale pour freinage selon l'état de la technique ;
- la figure 2 est une vue en coupe horizontale d'une partie du dispositif de pédale selon un premier mode de mise en oeuvre de l'invention ;
- la figure 3 est une vue en perspective du dispositif de pédale de la figure 2 ;
- la figure 4 est une vue partielle en coupe verticale de la figure 3 montrant la coopération entre la première tige et le système élastique de maintien ;
- la figure 5 est une vue en coupe horizontale d'un deuxième mode de réalisation de l'invention ; et
- la figure 6 est une vue en perspective du deuxième mode de réalisation de l'invention.

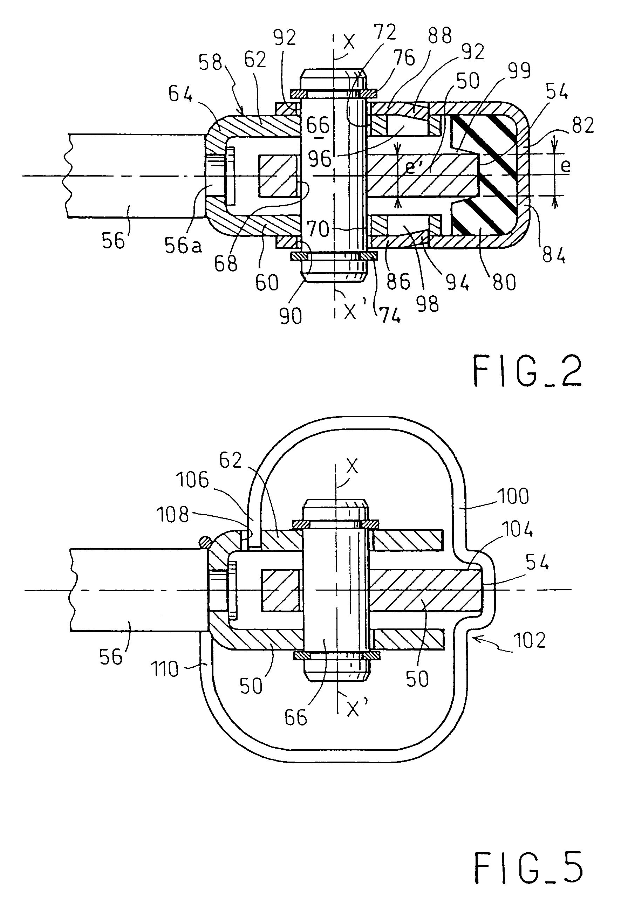

En se référant tout d'abord aux figures 2 à 4, on va décrire un premier mode de réalisation du dispositif de pédale. Sur ces figures, on a représenté la première tige 50 dont l'extrémité inférieure est solidaire de la pédale proprement dite, non représentée, et dont l'extrémité supérieure est articulée par rapport à la caisse du véhicule. Cette tige 50 est à section droite rectangulaire et comporte donc deux faces planes 50a et 50b ainsi qu'un côté dit avant 52 et un côté dit arrière 54. La tige de commande qui porte ici la référence 56 a son extrémité 56a
qui est solidaire d'une chape 58. Plus précisément, la chape 58 comporte deux bras parallèles 60 et 62 raccordés par une embase 64. L'extrémité 56a de la tige 56 est solidaire de la chape 58 par son embase 64. La chape 58 est montée à pivotement par rapport à la première tige 50 par l'intermédiaire d'un axe de pivotement 66. L'axe de pivotement 66 est engagé dans un orifice 68 de la tige 50 et dans deux orifices 70 et 72, respectivement ménagés dans les bras 60 et 62 de la chape 58. Des circlips 74 et 76 immobilisent en translation l'axe de pivotement 66 selon la direction de son axe géométrique XX'.

Comme on l'a déjà indiqué, selon une caractéristique essentielle de l'invention, la première tige 50 est plaquée contre l'axe de pivotement 66 par un système élastique. Selon le premier mode de réalisation illustré parles figures 2 à 4, le système élastique est constitué par une pièce ou tampon en matériau élastomérique 80 ou en caoutchouc. Cette pièce est rendue solidaire de la chape 58 par un étrier 82 qui comporte une base 84 et deux bras 86 et 88. Ces bras sont engagés sur l'axe de pivotement 66 par des orifices 90 et 92. L'étrier 82 est immobilisé par rapport à la chape 58 par deux ergots 92 et 94 qui pénètrent dans des orifices correspondants 96 et 98 des bras de la chape 58. La tige 50 est ainsi insérée entre la chape 58 et l'étrier 82.

Comme on le voit mieux sur la figure 2, le tampon élastomérique 80 comporte un évidement 99 dans lequel pénètre le deuxième côté 54 de la deuxième tige 50. L'évidement a dans son fond une largeur e qui est sensiblement égale à l'épaisseur e' de la tige 50. Comme le montre la figure 2 en particulier, l'action du tampon élastomérique 80 sur le côté 54 de la tige 50 tend à plaquer la paroi de l'orifice 68 contre la face de l'axe de pivotement 66 dans une zone qui est diamétralement opposée à l'embase 64 de la chape 58. On élimine ainsi l'effet du jeu entre la tige 50 et l'axe de pivotement 66 selon une direction perpendiculaire à l'axe XX' de l'axe de pivotement 66. Du fait de la coopération de l'évidement 99 du tampon 80 avec les flancs de la tige 50, c'est-à-dire ses faces principales 50a et 50b, on a également une immobilisation de la tige 52 par rapport à l'axe de pivotement 66 selon la direction XX'.

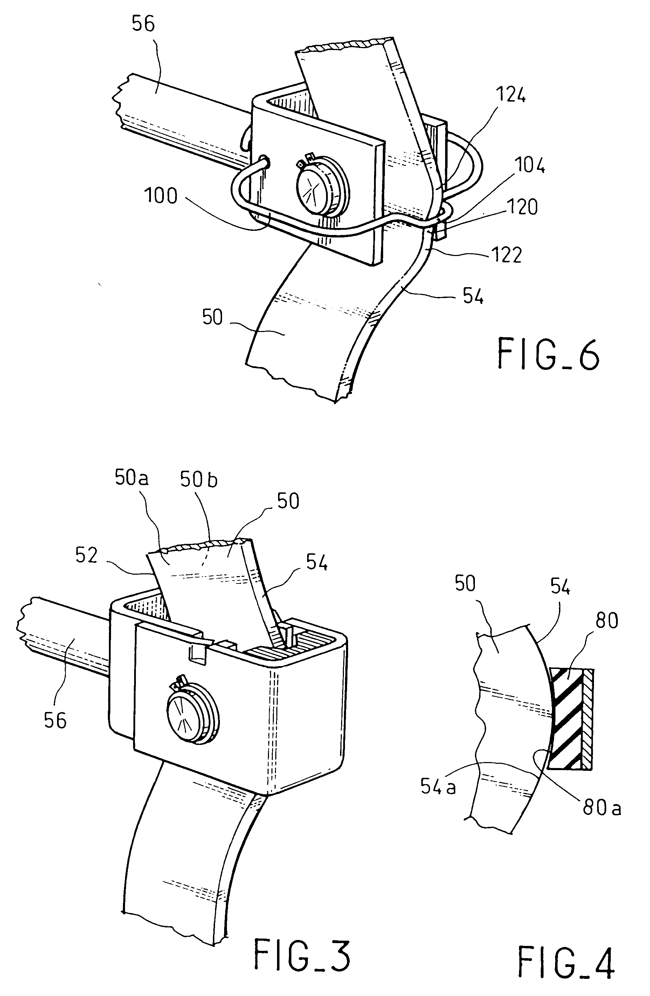

Selon un mode préféré de mise en oeuvre illustré par la figure 4, le côté 54 de la tige 50 présente une portion incurvée convexe 54a dans sa portion qui coopère avec la pièce élastique 80. De préférence, la pièce 80 présente également une face incurvée concave 80a dans la zone de contact avec le côté 54.

Comme le montre la figure 4, le rayon de courbure de la portion incurvée 80a de la pièce 80 est supérieur à celui de la portion incurvée 54a de la pièce 50 correspondante. On assure ainsi une action optimale de la pièce élastique 80 de la tige 50.

En se référant maintenant aux figures 5 et 6, on va décrire un deuxième mode de réalisation de l'invention. Ce deuxième mode ne se distingue du premier que par la structure des moyens élastiques de maintien de la tige 50 sur l'axe de pivotement 66. Comme le montre les figures 5 et 6, les moyens élastiques de maintien sont constitués par un fil métallique 100 à section circulaire réalisé en un acier à ressort ou tout autre matériau métallique présentant les mêmes propriétés. Le fil 100 comporte une partie médiane 102 qui coopère avec le côté 54 de la tige 50. Dans cette partie médiane, le fil 100 est déformé pour constituer une sorte de logement 102 pour le côté 54 de la tige 50. Le fil 100 est coudé et présente une première extrémité 106 qui est engagée dans un orifice 108 de la branche 62 de la chape tandis que son autre extrémité 110 forme une partie repliée qui entoure la tige de commande 56 à son extrémité solidaire de l'embase de la chape 58. On comprend qu'ainsi l'ensemble du fil métallique 100 est immobilisé en translation selon la direction de l'axe XX' de l'axe de pivotement 66 et également selon une direction orthogonale correspondant à la direction des bras de la chape 58. Il en résulte que la tige 50 du fait de la coopération de son côté 54 avec la portion formant évidement 104 du fil 100 est également d'une part appliquée contre l'axe de pivotement 66 et immobilisée en translation selon la direction XX'. Dans ce cas encore, on évite que les jeux de montage ne permettent la création de bruits parasites.

Comme le montre la figure 6, de préférence, le côté 54 de la tige 50 comporte une portion incurvée concave 120 raccordée à la partie courante du côté 54 par deux extensions 122 et 124. La partie incurvée 104 du fil élastique 100 coopère avec la tige 50 dans la portion 120 de son côté 54 qui est concave.

## Revendications

1. Dispositif de pédale pour véhicule automobile comprenant une première tige (50) dont une première extrémité est articulée sur le véhicule et dont l'autre extrémité est solidaire de ladite pédale et une tige de commande (56) dont une première extrémité est articulée par des moyens de liaison sur la partie médiane de ladite première tige et dont l'autre extrémité coopère avec un ensemble de commande, ces moyens de liaison comprenant eux-mêmes une chape (58) comportant une embase (64) et deux bras (60, 62) sensiblement parallèles, ladite embase étant solidaire de la première extrémité de la tige de commande ; un axe de pivotement (66) engagé dans un orifice (68) de ladite première tige et dans deux orifices (70, 72) de ladite chape, ladite tige (50) étant engagée entre les bras de ladite chape et présentant un premier côté (52) tourné vers ladite tige de commande et un deuxième côté (54) ; et des moyens élastiques (80, 100) prenant appui sur ladite chape pour plaquer une partie de la paroi de l'orifice (68) de la première tige contre ledit axe de pivotement, caractérisé en ce que lesdits moyens élastiques (80, 100) comprennent des moyens (99, 104) coopérant avec le deuxième côté de la première tige pour sensiblement immobiliser en translation ladite première tige (50) par rapport à ladite chape (58) selon la direction dudit axe de pivotement (66).

2. Dispositif de pédale selon la revendication 1, caractérisé en ce que lesdits moyens élastiques comprennent une pièce (80) en matériau élastique et des moyens mécaniques (82) pour maintenir ladite pièce en matériau élastique contre ledit deuxième côté de la première tige (50).

3. Dispositif de pédale selon la revendication 2, caractérisé en ce que les moyens mécaniques de maintien comprennent un étrier (82) comportant deux branches (86, 88) et une base (84), ladite pièce (80) en matériau élastique étant solidaire de ladite base et lesdits bras étant respectivement solidaires des branches (60, 62) de ladite chape (58).

4. Dispositif de pédale selon la revendication 2, caractérisé en ce que ladite pièce en matériau élastique (54) comporte un évidement (99) dans lequel est engagé le deuxième côté (54) de ladite première tige, la largeur dudit évidement selon la direction de l'axe de pivotement (66) étant sensiblement égale à l'épaisseur dudit deuxième côté selon ladite direction.

5. Dispositif de pédale selon la revendication 4, caractérisé en ce que le fond dudit évidement de ladite pièce en matériau élastique (80) présente, dans un plan orthogonal audit axe de pivotement, une section incurvée (80a) coopérant avec une portion incurvée (54a) du deuxième côté (54) de ladite première tige (50).

6. Dispositif de pédale selon la revendication 1, caractérisé en ce que lesdits moyens élastiques comprennent un organe formant ressort (100) dont les extrémités (106, 110) sont solidaires de ladite chape (58) et dont une portion médiane (102) est appliquée sur le deuxième côté (54) de ladite première tige (50).

7. Dispositif de pédale selon la revendication 6, caractérisé en ce que les extrémités dudit organe formant ressort (100) sont solidaire de ladite chape (58) pour immobiliser en translation, selon la direction de l'axe de pivotement (66), ledit organe formant ressort, et en ce que ladite portion médiane (102) de l'organe formant ressort présente une portion enfoncée (104) coopérant avec ledit deuxième côté (54) de la première tige (50) et avec les flancs dudit deuxième côté.

8. Dispositif de pédale selon la revendication 6, caractérisé en ce que le deuxième côté (54) de ladite première tige comporte une portion incurvée concave (120) raccordée au reste dudit deuxième côté par deux extensions (122, 124), ledit organe formant ressort coopérant avec ladite portion concave.

9. Dispositif de pédale selon la revendication 6, caractérisé en ce que ledit organe formant ressort est un fil métallique (100) à section droite circulaire réalisé en un matériau métallique du type à ressort.

## Claims

1. Pedal device for a motor vehicle comprising a first rod (50), a first end of which is articulated on the vehicle and the other end of which is securely attached to said pedal and a control rod (56), a first end of which is articulated by connecting means on the middle part of the first rod and the other end of which interacts with a control assembly, these connecting means themselves comprising a yoke (58) comprising a base (64) and two substantially parallel arms (60, 62), said base being securely attached to the first end of the control rod; a pivot pin (66) engaged in an aperture (68) of said first rod and in two apertures (70, 72) of said yoke, said rod (50) being engaged between the arms of said yoke and having a first side (52) turned towards said control rod and a second side (54); and resilient means (80, 100) bearing against said yoke so as to hold part of the wall of the aperture (68) of the first rod against said pivot pin, characterized in that said resilient means (80, 100) comprise means (99, 104) interacting with the second side of the first rod for substantially immobilizing said first rod (50) in translation relative to said yoke (58) in the direction of said pivot pin (66).

2. Pedal device according to Claim 1, characterized in that said resilient means comprise a part (80) of resilient material and mechanical means (82) for maintaining said part of resilient material against said second side of the first rod (50).

3. Pedal device according to Claim 2, characterized in that the mechanical maintaining means comprise a caliper (82) comprising two branches (86, 88) and a base (84), said part (80) of resilient material being securely attached to said base and said arms being securely attached respectively to the branches (60, 62) of said yoke (58).

4. Pedal device according to Claim 2, characterized in that said part of resilient material (54) comprises a recess (99) in which is engaged the second side (54) of said first rod, the width of said recess in the direction of the pivot pin (66) being substantially equal to the thickness of said second side in said direction.

5. Pedal device according to Claim 4, characterized in that the bottom of said recess of said part (80) of resilient material has, in a plane orthogonal to said pivot pin, an incurvate cross-section (80a) interacting with an incurvate portion (54a) of the second side (54) of said first rod (50).

6. Pedal device according to Claim 1, characterized in that said resilient means comprise a spring-forming member (100) the ends (106, 110) of which are securely attached to said yoke (58) and a middle portion (102) of which is applied onto the second side (54) of said first rod (50).

7. Pedal device according to Claim 6, characterized in that the ends of said spring-forming member (100) are securely attached to said yoke (58) in order to immobilize in translation, in the direction of the pivot pin (66), said spring-forming member, and in that said middle portion (102) of the spring-forming member has a recessed portion (104) interacting with said second side (54) of the first rod (50) and with the flanks of said second side.

8. Pedal device according to Claim 6, characterized in that the second side (54) of said first rod comprises a concave incurvate portion (120) connected to the rest of said second side by two extensions (122, 124), said spring-forming member interacting with said concave portion.

9. Pedal device according to Claim 6, characterized in that said spring-forming member is a metal wire (100) of circular cross-section constructed of a metallic material of the spring type.

## Patentansprüche

1. Pedalvorrichtung für Kraftfahrzeuge mit einer ersten Stange (50), deren eines Ende an dem Fahrzeug angelenkt ist und deren anderes Ende mit dem Pedal fest verbunden ist, sowie mit einer Steuerstange (56), deren eines Ende mit Hilfe von Verbindungsmitteln an dem Mittelteil der ersten Stange angelenkt ist und deren anderes Ende mit einer Steuereinheit zusammenwirkt, wobei diese Verbindungsmittel ihrerseits einen Bügel (58) mit einem Fuß (64) und zwei im wesentlichen parallel zueinander verlaufenden Armen (60, 62) aufweisen, wobei der Fuß mit dem ersten Ende der Steuerstange fest verbunden ist; sowie eine in einer Öffnung (68) der ersten Stange und in zwei Öffnungen (70, 72) des Bügels angebrachte Schwenkachse (66), wobei die Stange (50) zwischen den Armen des Bügels angebracht ist und eine der Steuerstange zugewandte erste Seite (52) sowie eine zweite Seite (54) aufweist; und elastische Mittel (80, 100), welche sich an dem Bügel abstützen, um einen Teil der Wand der Öffnung (68) der ersten Stange gegen die Schwenkachse zu drücken, dadurch gekennzeichnet, daß die elastischen Mittel (80, 100) Mittel (99, 104) enthalten, die mit der zweiten Seite der ersten Stange zusammenwirken, um die erste Stange (50) gegenüber dem Bügel (58) gegen eine Verschiebung in der Richtung der Schwenkachse (66) im wesentlichen festzulegen.

2. Pedalvorrichtung nach Anspruch 1, dadurch gekennzeichnet, daß die elastischen Mittel ein Stück (80) aus elastischem Material sowie mechanische Mittel (82) aufweisen, um das Stück aus elastischem Material an der zweiten Seite der ersten Stange (50) zu halten.

3. Pedalvorrichtung nach Anspruch 2, dadurch gekennzeichnet, daß die mechanischen Haltemittel einen Bügel (82) mit zwei Schenkeln (86, 88) und einem Steg (84) aufweisen, wobei das Stück (80) aus elastischem Material mit dem Steg fest verbunden ist und wobei die Arme jeweils fest mit den Schenkeln (60, 62) des Bügels (58) verbunden sind.

4. Pedalvorrichtung nach Anspruch 2, dadurch gekennzeichnet, daß das Stück aus elastischem Material (54) eine Ausnehmung (99) aufweist, in welcher die zweite Seite (54) der ersten Stange angebracht ist, wobei die Breite der Ausnehmung in der Richtung der Schwenkachse (66) im wesentlichen der Dicke der zweiten Seite in dieser Richtung entspricht.

5. Pedalvorrichtung nach Anspruch 4, dadurch gekennzeichnet, daß der Boden der Ausnehmung des Stückes aus elastischem Material (80) in einer zu der Schwenkachse senkrechten Ebene einen gebogenen Abschnitt (80a) aufweist, welcher mit einem gebogenen Teil (54a) der zweiten Seite (54) der ersten Stange (50) zusammenwirkt.

6. Pedalvorrichtung nach Anspruch 1, dadurch gekennzeichnet, daß die elastischen Mittel ein federndes Element (100) enthalten, dessen Enden (106, 110) mit dem Bügel (58) fest verbunden sind und von welchem ein Mittelteil (102) an der zweiten Seite (54) der ersten Stange (50) anliegt.

7. Pedalvorrichtung nach Anspruch 6, dadurch gekennzeichnet, daß die Enden des federnden Elementes (100) mit dem Bügel (58) fest verbunden sind, um das federnde Element gegen eine Verschiebung in der Richtung der Schwenkachse (66) festzulegen, und daß der Mittelteil (102) des federnden Elementes eine Einbuchtung (104) aufweist, welche mit der zweiten Seite (54) der ersten Stange (50) sowie mit den Flanken der zweiten Seite zusammenwirkt.

8. Pedalvorrichtung nach Anspruch 6, dadurch gekennzeichnet, daß die zweite Seite (54) der ersten Stange einen konkaven gekrümmten Teil (120) aufweist, welcher mit dem Rest der zweiten Seite über zwei Verlängerungen (122, 124) verbunden ist, wobei das federnde Element mit dem konkaven Teil zusammenwirkt.

9. Pedalvorrichtung nach Anspruch 6, dadurch gekennzeichnet, daß das federnde Element ein Metalldraht (100) mit einem runden Querschnitt ist und aus einem metallischen Material vom Federtyp gefertigt ist.
